# EUROPEAN PATENT SPECIFICATION

(11) **EP 3 860 111 B1**
(45) Date of publication and mention of the grant of the patent: **23.08.2023**
(21) Application number: 20772191.1
(22) Date of filing: 27.03.2020
(51) Int. Cl.: H04N 23/611, H04N 23/55, H04N 23/74, G03B 15/05

(54) **LIGHT SUPPLEMENTING DEVICE, CONTROL METHOD FOR LIGHT SUPPLEMENTING DEVICE, AND COMPUTER STORAGE MEDIUM**
LICHTERGÄNZENDE VORRICHTUNG, STEUERUNGSVERFAHREN FÜR LICHTERGÄNZENDE VORRICHTUNG UND COMPUTERSPEICHERMEDIUM
DISPOSITIF DE COMPLÉMENT DE LUMIÈRE, PROCÉDÉ DE COMMANDE DE DISPOSITIF DE COMPLÉMENT DE LUMIÈRE ET SUPPORT DE STOCKAGE INFORMATIQUE

(30) Priority: 04.12.2019 CN 201911230349
(43) Date of publication of application: 04.08.2021
(73) Proprietor: Shenzhen Transsion Holdings Co., Ltd., Shenzhen (CN)
(72) Inventor: XIAO, Ming, Shenzhen Guangdong 518057 (CN); LI, Lingzhi, Shenzhen Guangdong 518057 (CN); WANG, Haibin, Shenzhen Guangdong 518057 (CN); ZHAO, Zihui, Shenzhen Guangdong 518057 (CN); ZHU, Binjie, Shenzhen Guangdong 518057 (CN); DAI, Wenhui, Shenzhen Guangdong 518057 (CN)
(74) Representative: Elzaburu S.L.P.
(86) International application number: PCT/CN2020/081607
(87) International publication number: WO 2021/109374

(56) References cited:
- CN-A- 1 953 513
- CN-A- 103 916 584
- CN-A- 105 842 958
- CN-A- 109 194 858
- CN-A- 110 488 524
- KR-A- 20070 043 442
- US-A1- 2012 014 683
- US-A1- 2015 085 096
- US-A1- 2016 178 991

## Description

This application claims priority to Chinese Patent Application No. 201911230349.3, filed on December 4, 2019, the applicant is Shenzhen Transsion Holdings Co., Ltd., and entitled "FILL LIGHT APPARATUS, CONTROLLING METHOD OF FILL LIGHT APPARATUS AND COMPUTER STORAGE MEDIUM".

### Technical field

The present application relates to the technical field of filling light, in particular to fill light apparatus, a controlling method of the fill light apparatus and a computer storage medium.

### Background

A flashlight is a common component in photographing apparatus, which is configured to fill light for a photographing environment in a darker situation or in a poor light condition, so as to facilitate a completion of photographing. An existing working process of a flashlight is generally as follows: when the flashlight is on, a camera preview is on, a shutter is clicked during a preview process, and the flashlight is energized to perform a flash fill light action to illuminate a shooting background. Since brightness and depth of the background are affected by a main light source, the higher the brightness of the flashlight is, the better a brightening effect becomes. However, as the brightness of the flashlight increases, an ability of eyes of a subject to withstand light is also facing a test. In order to protect the eyes of the subject, the brightness of the flashlight cannot be too bright, thereby rendering an actual fill light intensity limited. In addition, since a light-emitting angle of the existing flashlight is fixed, which cannot illuminate a long-distance scenery, therefore, a fill light range is limited. It can be seen that the existing flashlight cannot meet fill light requirements in different shooting scenarios.

The existing working process of the flashlight is generally as follows: when the flashlight is on, the camera preview is on, the shutter is clicked during the preview process, and the flashlight is energized to perform the flash fill light action to illuminate the shooting background. Since the brightness and the depth of the background are affected by the main light source, the higher the brightness of the flashlight is, the better the brightening effect becomes. However, as the brightness of the flashlight increases, the ability of the eyes of the subject to withstand light is also facing a test. In order to protect the eyes of the subject, the brightness of the flashlight cannot be too bright, thereby rendering the actual fill light intensity limited. In addition, since the light-emitting angle of the existing flashlight is fixed, which cannot illuminate the long-distance scenery, therefore, the fill light range is limited. It can be seen that the existing flashlight cannot meet fill light requirements in different shooting scenarios.

US 20120014683 A1 relates to a camera flash system controlled via microelectromechanical systems (MEMS) array. The camera flash system may include a light source and an array that includes MEMS-based light-modulating devices disposed in front the light source.

CN 103916584 A relates to an image acquisition system. The image acquisition system includes an image acquisition unit, an auxiliary light projection unit and a control unit.

### Summary

To solve the above technical problem, the present application provides fill light apparatus, a controlling method of the fill light apparatus and a computer storage medium, which can control a light-emitting area or a light-emitting angle of the fill light apparatus to meet fill light requirements in different shooting scenarios.

The invention is set out in the appended set of claims.

To solve the above technical problem, the present application provides fill light apparatus, including:
a flashlight; and
a light-guide component located at a light-emitting edge of the flashlight, and controllable to change a shape and/or a light-transmitting area to change a light-emitting area and/or a light-emitting angle of the fill light apparatus.

As such, the light-guide component includes a first polarizer, a liquid crystal layer and a second polarizer arranged in sequence. The light-guide component is connected with a liquid crystal driving module, and the liquid crystal driving module is configured to control an arrangement direction of liquid crystals in the liquid crystal layer to change the light-transmitting area of the light-guide component.

As such, the light-guide component is connected with a deformation driving assembly, and the deformation driving assembly is configured to drive the light-guide component to bend and deform to change the shape of the light-guide component.

As such, the deformation driving assembly includes a magnet, a coil and a driving ring. The driving ring surrounds the light-guide component by one turn, the coil is wound around the driving ring, and the magnet is located at opposite sides of the driving ring, and the driving ring moves, when the coil is energized, to push up the light-guide component to bend and deform.

As such, further including a diastimeter, configured to detect a distance between a shooting target and the fill light apparatus, so that the fill light apparatus controls, according to the distance, to change the shape of the light-guide component to change the light-emitting angle of the fill light apparatus.

As such, further including a recognizing module, configured to perform a recognition of a pupil in a preview image and determine a position of the pupil, so that the fill light apparatus controls, according to the position of the pupil, to change the light-transmitting area of the light-guide component to change the light-emitting area of the fill light apparatus.

The present application further provides a controlling method of fill light apparatus, where the fill light apparatus includes a flashlight and a light-guide component, the light-guide component is located at a light-emitting edge of the flashlight, and the controlling method includes:
obtaining a control parameter of the light-guide component; and
changing a shape and/or a light-transmitting area of the light-guide component according to the control parameter to change a light-emitting area and/or a light-emitting angle of the fill light apparatus.

As such, the obtaining the control parameter of the light-guide component includes:
obtaining a preview image of a camera module;
performing a recognition of a pupil in the preview image; and
if the recognition is successful, determining, according to a position of the pupil, a light-shielding area of the light-guide component to obtain the control parameter.

The method further includes:
when obtaining the preview image, controlling the flashlight to pre-flash for a preset number of times at a preset power or illuminate continuously.

As such, the light-guide component includes a first polarizer, a liquid crystal layer and a second polarizer arranged in sequence, and the changing a shape and/or a light-transmitting area of the light-guide component according to the control parameter includes:
controlling an arrangement direction of liquid crystals in the liquid crystal layer according to the light-shielding area, so that the light-guide component is made non light-transmitting in the light-shielding area.

As such, the fill light apparatus further includes a diastimeter configured to detect a distance between a shooting target and the fill light apparatus, and the obtaining a control parameter of the light-guide component includes:
obtaining the distance between the shooting target and the fill light apparatus; and
when the distance is greater than or equal to a preset distance, obtaining a first preset light-emitting angle as a target light-emitting angle to obtain the control parameter, or obtaining a light-emitting angle corresponding to the distance as the target light-emitting angle to obtain the control parameter.

As such, the obtaining a control parameter of the light-guide component further includes:
when the distance is less than the preset distance, obtaining a second preset light-emitting angle as the target light-emitting angle to obtain the control parameter, where the second preset light-emitting angle is greater than the first preset light-emitting angle.

As such, the light-guide component is connected with a deformation driving assembly, the deformation driving component is configured to drive the light-guide component to bend and deform, and the changing a shape and/or a light-transmitting area of the light-guide component according to the control parameter includes:
determining a driving stroke of the deformation driving assembly according to the target light-emitting angle; and
controlling, according to the driving stroke, the deformation driving assembly to drive the light-guide component to bend and deform to change the shape of the light-guide component.

As such, the deformation driving assembly includes a magnet, a coil and a driving ring. The driving ring surrounds the light-guide component by one turn, the coil is wound around the driving ring, and the magnet is located at opposite sides of the driving ring, and the controlling, according to the driving stroke, the deformation driving assembly to drive the light-guide component to bend and deform includes:
obtaining an energizing current of the coil according to the driving stroke; and
energizing the coil according to the energizing current, so that the driving ring is driven to move to push up the light-guide component to bend and deform.

As such, after the changing a shape and/or a light-transmitting area of the light-guide component according to the control parameter to change a light-emitting area and/or a light-emitting angle of the fill light apparatus, further including:
when receiving a shooting operation or an illuminating operation, controlling the flashlight to flash or continuously illuminate.

The present application further provides a computer storage medium with computer program instructions stored thereon; the computer program instructions, when executed by a processor, implement the controlling method of the fill light apparatus described above.

The fill light apparatus according to the present application includes a flashlight and a light-guide component, the light-guide component is located at a light-emitting edge of the flashlight, and can be controlled to change a shape and/or a light-transmitting area to change a light-emitting area and/or a light-emitting angle of the fill light apparatus. The controlling method of the fill light apparatus includes: obtaining a control parameter of the light-guide component, and changing a shape and/or a light-transmitting area of the light-guide component according to the control parameter to change a light-emitting area and/or a light-emitting angle of the fill light apparatus. In this way, the light-emitting area and/or the light-emitting angle of the fill light apparatus can be controlled according to the present application, thereby meeting fill light requirements in different shooting scenarios.

### Brief description of drawings

FIG. 1 is a schematic structural diagram of fill light apparatus according to a first embodiment;
FIG. 2 is a structural schematic diagram of fill light apparatus in an initial state according to a first embodiment;
FIG. 3 is a schematic structural diagram of fill light apparatus in a human eye protection state according to a first embodiment;
FIG. 4 is a schematic diagram of effects of fill light apparatus in a human eye protection state according to a first embodiment;
FIG. 5 is a schematic structural diagram of fill light apparatus in a long-distance shooting state according to a first embodiment;
FIG. 6 is a schematic diagram of effects of fill light apparatus in a long-distance shooting state according to a first embodiment;
FIG. 7 is a schematic flowchart of a controlling method of fill light apparatus according to a second embodiment; and
FIG. 8 is a schematic structural diagram of a terminal according to an exemplary embodiment.

### Description of embodiments

In the following, implementations of the present application are described with reference to specific concrete embodiments. People familiar with the technology can easily understand other advantages and effects of the present application from the contents disclosed in the specification.

In the following description, referring to the accompanying drawings, the accompanying drawings describe several embodiments of the present application. It should be understood that other embodiments may be used, and that changes in mechanical composition, structural changes, electrical changes, and operational changes may be made.

The following detailed description should not be construed in a limited manner, and the terms used herein are simply for the purpose of describing specific embodiments, rather than being intended to limit the present application. Although the terms first, second, and etc. are used herein to describe various elements in some embodiments, these elements should not be limited by these terms. These terms are simply used to distinguish one element from another.

Further, as used herein, singular forms "a", "one" and "the" are intended to include plural forms as well, unless the context indicates otherwise. It should be further understood that the terms "including" and "consisting of" indicate existence of the described features, steps, operations, elements, components, items, categories, and/or groups, and do not exclude existence, presence or addition of one or more other features, steps, operations, elements, components, items, categories, and/or groups. The terms "or" and "and/or" as used herein are interpreted as inclusive, or mean any one or any combination. Therefore, "A, B or C" or "A, B and/or C" means "any of the following: A; B; C; A and B; A and C; B and C; A, B and C". Exceptions to the definition occur only when combinations of components, functions, steps, or operations are inherently mutually exclusive in some ways.

### A first embodiment

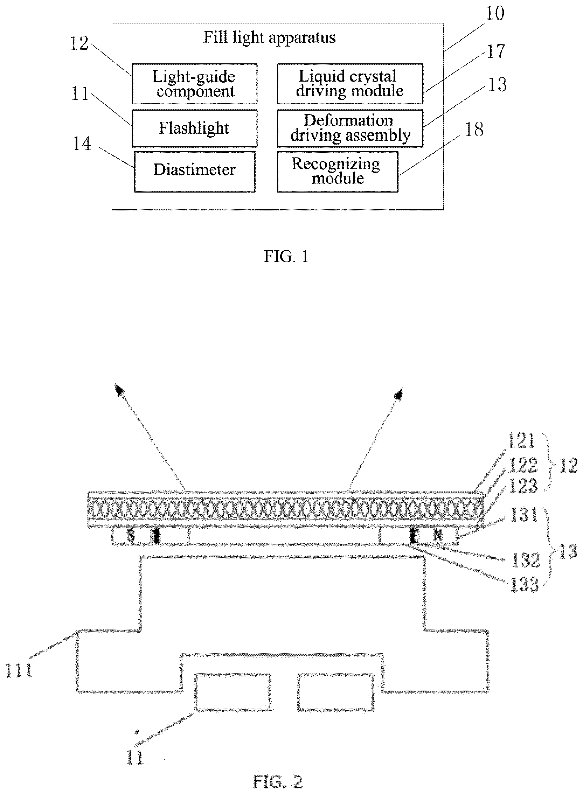

FIG. 1 is a schematic structural diagram of fill light apparatus according to a first embodiment. FIG. 2 is a structural schematic diagram of fill light apparatus when it is in an initial state according to a first embodiment. Please refer to FIGS. 1 and 2, fill light apparatus 10 of the present embodiment includes a flashlight 11 and a light-guide component 12. The light-guide component 12 is located at a light-emitting edge of the flashlight 11, and can be controlled to change a shape and/or a light-transmitting area to change a light-emitting area and/or a light-emitting angle of the fill light apparatus. 10, thereby providing a better fill light effect.

The flashlight 11 is provided with a transparent lamp shade 111, and the number of the flashlights 11 can be one, two or more, where the flashlights are arranged according to a specific structure to achieve a suitable light-emitting effect, for example, when the number is two, they are arranged in parallel, and when the number is four, two adjacent flashlights are arranged in a matrix.

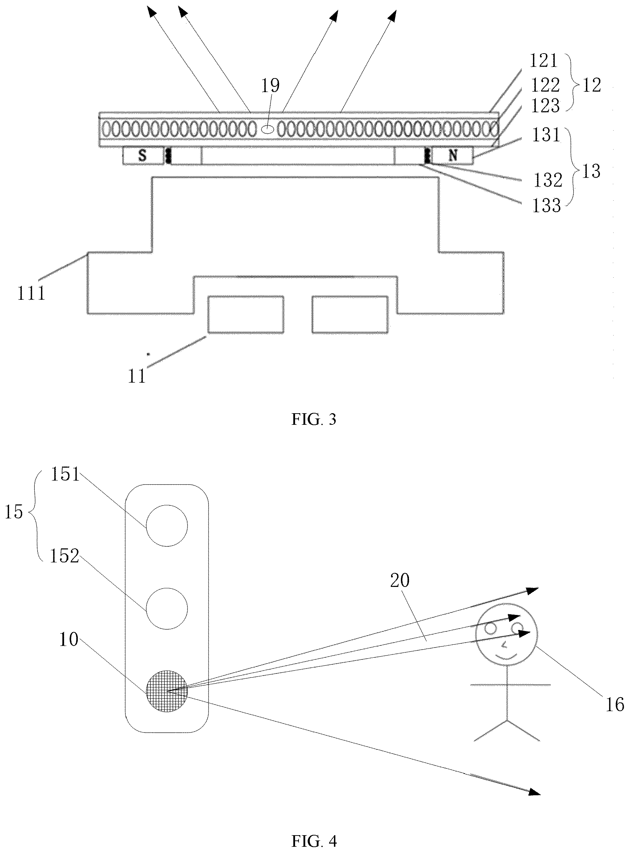

The light-guide component 12 is configured to emit the light of the flashlight 11 and guide the direction of the light. In the present embodiment, the light-guide component 12 includes a first polarizer 121, a liquid crystal layer 122 and a second polarizer 123 arranged in sequence. The light-guide component 12 is connected with a liquid crystal driving module 17, which is configured to control an arrangement direction of liquid crystals in the liquid crystal layer 122 to change the light-transmitting area of the light-guide component 12. A light emitting direction of the first polarizer 121 is parallel to that of the second polarizer 123. When a liquid crystal in the liquid crystal layer 122 is twisted 0 degree from a side of the second polarizer 123 to a side of the first polarizer 121, the light of the flashlight 11 can emit from the light-guide component 12. On the contrary, when being twisted 90 degrees, since the light-guide component 12 is held in a non light-transmitting state, the light of the flashlight 11 cannot emit therefrom. Therefore, by controlling the arrangement direction of at least a part of the liquid crystals in the liquid crystal layer 122, the light can be partially shielded, thereby changing the light-transmitting area of the light-guide component 12 to achieve the purpose of changing the light-emitting area of the fill light apparatus 10. As shown in FIG. 3, when the arrangement direction of a part of the liquid crystals 19 of the liquid crystal layer 122 is changed, and a corresponding area of the light-guide component 12 is made non light-transmitting, the light emitting from the flash 11 is divided into two areas.

During design, the liquid crystals of the liquid crystal layer 122 can be fractioned directionally to keep an initial state of the liquid crystals as being twisted at 0 degree, that is, in the initial state, the light of the flashlight 11 can emit without shielding, thus reducing an energy consumption for controlling the liquid crystal. On the basis of this, when it is necessary to adjust the light-emitting area of the fill light apparatus 10, a liquid crystal at a corresponding position is controlled to achieve light-shielding. It can be understood that an initial twisted state of the liquid crystal can be adjusted according to an angle between the light emitting direction of the first polarizer 121 and that of the second polarizer 123, and is not limited thereto. In practice, the light-transmitting area of the light-guide component 12 can also be controlled by virtue of an electrochromic layer, for example, by holding the electrochromic layer in a light-transmitting state when not energized, and holding it in a non light-transmitting state when energized, so that the light-transmitting area of the light-guide component 12 can be changed by controlling an energizing state of at least a part of the electrochromic layer, the light-emitting area of the fill light apparatus 10 is thereby changed.

Human eye protection can be realized by changing the light-emitting area of the fill light apparatus 10. In the present embodiment, the fill light apparatus 10 further includes a recognizing module 18, which is configured to perform a recognition of a pupil in a preview image and determine a position of the pupil, so that the fill light apparatus 10 controls, according to the position of the pupil, to change the light-transmitting area of the light-guide component 12 to change the light-emitting area of the fill light apparatus 10, thereby avoiding the human eye when the flashlight 11 flashes. When in use, after opening the preview image of a camera module, a face recognition algorithm is synchronously turned on to perform a face detection on the preview image. When a human face is found in the preview image, a recognition for a pupil is performed. If the recognition is successful, determine the position of the pupil, and then determine the light-shielding area of the light-guide component 12 according to the position of the pupil. Then, the fill light apparatus 10 controls liquid crystals corresponding to the light-shielding area in the liquid crystal layer 122 on the light-guide component 12 to deflect to shield light, thereby changing the light-emitting area of the light-guide component 12. When a shutter is clicked to start photographing, the fill light apparatus 10 receives a photographing signal sent out, and the flashlight 11 is energized to start lighting. At this time, as shown in FIG. 4, part of lamplight is shielded so as to prevent an eye area 20 from being shot directly, thus ensuring that eyes of a shooting target 16 will not be subjected to stimulations while ensuring a fill light intensity, thereby realizing human eye protection as well as improving a red-eye phenomenon.

When the preview image is opened, the flashlight 11 is controlled to pre-flash for a preset number of times with a preset power or illuminate continuously, so that the camera module may capture a picture in a dark environment, thereby enabling the recognizing module 18 to accurately recognize the pupil, in this case, the preset power is less than the power of the flashlight 11 when flashing.

Please refer to FIG. 1 and FIG. 2 again, the light-guide component 12 is in a plane state in the initial state, with a largest light-emitting angle. The light-guide component 12 is connected with a deformation driving assembly 13, which is configured to drive the light-guide component 12 to bend and deform to change the shape of the light-guide component 12, and further change the light-emitting angle of the fill light apparatus 10.

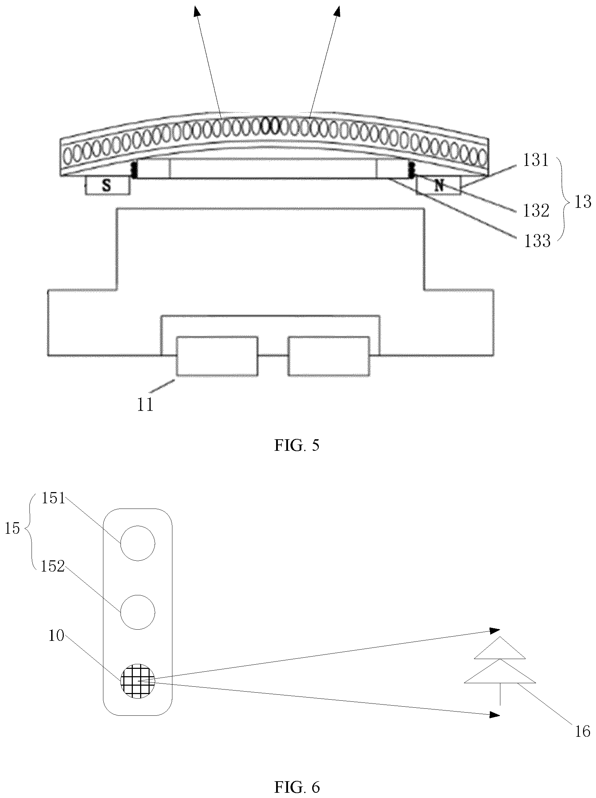

In the present embodiment, the deformation driving assembly 13 includes a magnet 131, a coil 132 and a driving ring 133. The driving ring 133 surrounds the light-guide component 12 by one turn, the coil 132 is wound on the driving ring 133, and the magnet 131 is located on the opposite sides of the driving ring 133. As shown in FIG. 5, when the coil 132 is energized, a magnetic field is produced between the coil 132 and the magnet 131, and a Lorentz force is provided to the driving ring 133 through magnetic induction, so that the driving ring 133 is made to move upward to push up the light-guide component 12, thus enabling the light-guide component 12 to bend and deform. When the driving ring 133 pushes up the light-guide component 12 to form a convex lens shape, the light can be concentrated and the light-emitting angle can be narrowed. At this time, a farther range can be irradiated by the light. In practice, a deformation control of the light-guide component 12 can also be realized by an electrode driving. The size of the deformation driving assembly 13 can be reduced by using the magnet 131, the coil 132 and the driving ring 133, thus an internal space of the fill light apparatus 10 can be saved.

By changing the light-emitting angle of the fill light apparatus 10, it is possible to switch the lamplight between the long-distance and short-distance sceneries. In the present embodiment, the fill light apparatus 10 further includes a diastimeter 14 configured to detect a distance between a shooting target and the fill light apparatus 10, so that the fill light apparatus 10 controls, according to the distance, to change the shape of the light-guide component 12 to change the light-emitting angle of the fill light apparatus 10. The diastimeter 14 is, for example, a laser diastimeter or an infrared diastimeter. When in use, the diastimeter 14 detects the distance between the shooting target and the fill light apparatus 10. When the distance is greater than or equal to a preset distance, obtaining a first preset light-emitting angle as the target light-emitting angle, or obtaining a light-emitting angle corresponding to the distance as the target light-emitting angle; when the distance is less than the preset distance, obtaining a second preset light-emitting angle as the target light-emitting angle, and the second preset light-emitting angle is greater than the second preset light-emitting angle. Next, a driving stroke of the deformation driving assembly 13 is determined according to the target light-emitting angle, and the deformation driving assembly 13 is driven to bend and deform according to the driving stroke, that is, an energizing current of the coil 132 is obtained according to the driving stroke, and the coil 132 is energized according to the energizing current, which causes the driving ring 133 to be driven to move a corresponding distance to push up the light-guide component 12 to bend and deform, thereby changing the shape of the light-guide component 12. For example, if the preset distance is 1m, when the distance between the shooting target and the fill light apparatus 10 is less than or equal to 1 m, it switches to a short-distance shooting state, and the light-guide component 12 does not bent so as to realize a light divergence of the flashlight 11; when the distance between the shooting target 16 and the light compensating apparatus 10 is greater than 1m, it switches to a long-distance shooting state, and the light-guide component 12 is bent so as to realize the light gathering of the flashlight 11. When the shutter is clicked to start photographing, the fill light apparatus 10 receives a photographing signal sent out, and starts to light with a current applied. At this time, as shown in FIG. 6, since the light-guide component 12 is bent into the convex lens shape, the light-emitting angle of the fill light apparatus 10 becomes smaller, and the light is gathered together to irradiate a farther shooting target 16.Further, human eyes can be protected while the light-guide component 12 bends and deforms, so that a fill light effect of the fill light apparatus 10 can be improved during the short-distance shooting, and a red-eye phenomenon can be eliminated. When in use, the distance between the shooting target and the fill light apparatus 10 is detected by the diastimeter 14 and a recognition of a pupil is performed by a recognizing module 18. When the distance between the shooting target and the fill light apparatus 10 is within a preset distance range and the pupil is recognized, the light-emitting angle of the fill light apparatus 10 is determined according to the distance between the shooting target and the fill light apparatus 10, and the light-shielding area of the flashlight 11 is determined according to the position of the pupil, and at the same time the light-guide component 12 is controlled to bend and deform to form a light-shielding area. When the shutter is clicked to start photographing, the fill light apparatus 10 receives the photographing signal sent out, and starts to light with a current applied. At this time, since the light-guide component 12 is bent into the convex lens shape, the light-emitting angle of the fill light apparatus 10 becomes smaller, the light is gathered together, and the fill light effect is better. And part of the lamplight is shielded to avoid direct irradiation to the eye area, in this way, protection for human eyes is achieved, the red-eye phenomenon is improved, consequently, the short-distance shooting effect is improved.

In the present embodiment, the fill light apparatus 10 is applied to a mobile terminal, and the camera module and the flashlight 11 are located on the back shell side of the mobile terminal. As shown in FIG. 4 and FIG. 6, the camera module 15 includes a first camera 151 and a second camera 152, where the first camera 151, the second camera 152 and the flashlight 11 are arranged in order to enrich shooting functions of the camera and improve a shooting effect.

The fill light apparatus of the present application can protect human eyes when taking strong light photographing at night to improve the brightness of the fill light apparatus, thereby improving a photographing effect. When photographing in a short-distance, there is no direct lamplight focusing on the human eyes, thus eliminating the red-eye phenomenon. When shooting a long-distance scenery or illuminating at night, the fill light apparatus can be switched to the long-distance mode for illumination, so that a flash imaging effect in the long-distance scenery is better, and the light-emitting angle of the fill light apparatus can be switched to achieve lighting in both long-distance and short-distance sceneries, hence, a utilization efficiency of the flashlight is improved. When shooting the long-distance scenery or illuminating at night, it may be possible to switch into the long-distance scenery mode according to the distance when a video is recorded constantly and brightly. Constantly bright switching between the long-distance and short-distance sceneries is enabled when recording a video to meet a recording effect in the long-distance scenery.

The fill light apparatus of the present application includes the flashlight and the light-guide component, the light-guide component is located at the light-emitting edge of the flashlight, and can be controlled to change the shape and/or the light-transmitting area to change the light-emitting area and/or the light-emitting angle of the fill light apparatus. In this way, the present application can control the light-emitting area and/or the light-emitting angle of the fill light apparatus to meet fill light requirements in different shooting scenarios.

### A second embodiment

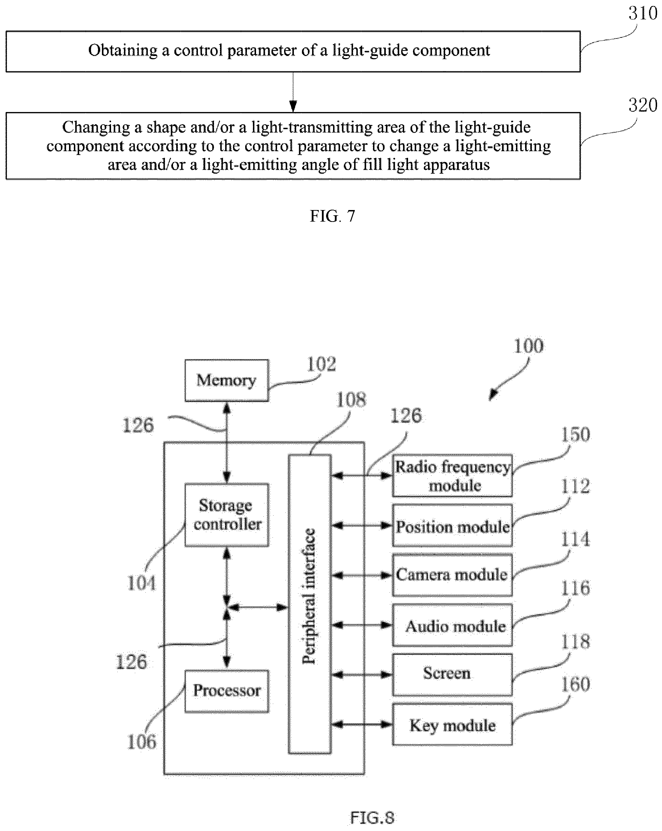

FIG. 7 is a schematic flowchart of a controlling method of fill light apparatus according to a second embodiment. As shown in FIG. 7, the controlling method of the fill light apparatus of the present embodiment is applied to the fill light apparatus according to the first embodiment, which includes but is not limited to the following steps:
Step 310: obtaining a control parameter of the light-guide component;
Step 320: changing a shape and/or a light-transmitting area of the light-guide component according to the control parameter to change a light-emitting area and/or a light-emitting angle of the fill light apparatus.

In the present embodiment, the control parameter includes the light-emitting angle and/or a light-shielding area of the light-guide component. The process of obtaining a control parameter of the light-guide component in Step 310 includes:
obtaining a preview image of a camera module;
performing a recognition of a pupil in the preview image; and
if the recognition is successful, determining, according to a position of the pupil, a light-shielding area of the light-guide component to obtain the control parameter.

In the present embodiment, when obtaining the preview image, the flashlight is controlled to pre-flash for a preset number of times at a preset power or illuminate continuously.

When the light-guide component includes a first polarizer, a liquid crystal layer and a second polarizer arranged in sequence, the Step 320 that changing a shape and/or a light-transmitting area of the light-guide component according to the control parameter includes:
controlling an arrangement direction of liquid crystals in the liquid crystal layer according to the light-shielding area, so that the light-guide component is made non light-transmitting in the light-shielding area.

In the present embodiment, the fill light apparatus further includes a diastimeter, configured to detect a distance between a shooting target and the fill light apparatus. The process of obtaining a control parameter of the light-guide component in Step 310 includes:
obtaining the distance between the shooting target and the fill light apparatus;
when the distance is greater than or equal to a preset distance, obtaining a first preset light-emitting angle as a target light-emitting angle to obtain the control parameter, or obtaining the light-emitting angle corresponding to the distance as the target light-emitting angle to obtain the control parameter; and
when the distance is less than the preset distance, obtaining a second preset light-emitting angle as the target light-emitting angle to obtain the control parameter, and the second preset light-emitting angle is greater than the first preset light-emitting angle.

When the distance is greater than or equal to the preset distance, the target light-emitting angle may be a fixed smaller light-emitting angle, or may be determined according to a preset relationship between distances and light-emitting angles, that is, different distances correspond to different light-emitting angles.

In the present embodiment, the light-guide component is connected with a deformation driving assembly, the deformation driving component is configured to drive the light-guide component to bend and deform, and the changing a shape and/or a light-transmitting area of the light-guide component according to the control parameter includes:
determining a driving stroke of the deformation driving assembly according to the target light-emitting angle; and
controlling, according to the driving stroke, the deformation driving assembly to drive the light-guide component to bend and deform to change the shape of the light-guide component.

When the deformation driving assembly includes a magnet, a coil and a driving ring. The driving ring surrounds the light-guide component by one turn, the coil is wound around the driving ring, and the magnet is located at opposite sides of the driving ring, and the controlling, according to the driving stroke, the deformation driving assembly to drive the light-guide component to bend and deform includes:
obtaining an energizing current of the coil according to the driving stroke; and
energizing the coil according to the energizing current, so that the driving ring is driven to move to push up the light-guide component to bend and deform.

The energizing current of the coil affects the size of a magnetic field, which in turn affects a moving distance of the drive ring, thus corresponding to different degrees of deformation of the light-guide component.

In the present embodiment, after the changing a shape and/or a light-transmitting area of the light-guide component according to the control parameter to change a light-emitting area and/or a light-emitting angle of the fill light apparatus, further including:
when a shooting operation or an illuminating operation is received, controlling the flashlight to flash or continuously illuminate.

When a photographing operation is received, the flashlight is controlled to flash according to a selected lamplight brightness for auxiliary illuminating; or, when the illuminating operation is received, the flashlight is controlled for continuous illuminating, which can facilitate video recording or act as a torch in a constant light state.

In the present embodiment, the fill light apparatus is a mobile terminal.

Reference may be made to relevant descriptions in the first embodiment for execution processes of each step in the controlling method of the fill light apparatus of the present embodiment, which will not be repeated herein again.

In the controlling method of the fill light apparatus of the present application, the light-emitting area and/or light-emitting angle of the fill light apparatus can be controlled by obtaining the control parameter of the light-guide component, and the shape and/or the light-transmitting area of the light-guide component is(are) changed according to the control parameter to change the light-emitting area and/or the light-emitting angle of the fill light apparatus. The control on the light-emitting area and/or the light-emitting angle of the fill light apparatus is enabled, thus meeting fill light requirements in different shooting scenarios.

The present application further provides a computer storage medium, the computer storage medium stores computer program instructions that, when executed by a processor, implement the controlling method of the fill light apparatus described above.

FIG. 8 is a schematic structural diagram of a terminal according to an exemplary embodiment. The fill light apparatus and the controlling method of the fill light apparatus of the present application may, but are not limited to, be applied to the terminal shown in FIG. 8. As shown in FIG. 8, a terminal 100 includes a memory 102, a storage controller 104, one or more (only one shown in the figure) processor 106, a peripheral interface 108, a radio frequency module 150, a positioning module 112, a camera module 114, an audio module 116, a screen 118, and a key module 160. These components communicate with each other via one or more communication buses/signal lines 126.

It can be understood that the structure shown in FIG. 8 is only schematic, and the terminal 100 may also include more or fewer components than those shown in FIG. 8, or have different configurations than those shown in FIG. 8. Each component shown in FIG. 8 may be implemented in hardware, software, or combinations thereof.

The memory 102 can be used to store software programs and modules, such as the program instructions/modules corresponding to the controlling method of the fill light apparatus in the embodiment of the present application, and the processor 106 can execute various functional applications and data processing by running the software programs and modules stored in the storage controller 104, that is, to realize the controlling method of the fill light apparatus.

The memory 102 may include a high-speed random access memory, and may also include a non-volatile memory, such as one or more magnetic memory apparatus, flash memories, or other non-volatile solid-state memories. In some instances, the memory 102 may further include memories set remotely relative to the processor 106, which may be connected to the terminal 100 via a network. Instances of the above network include but are not limited to an Internet, an intranet, a local area network, a mobile communication network and combinations thereof. Access to the memory 102 by the processor 106 and other possible components may be performed under the control of the storage controller 104.

The peripheral interface 108 couples various input/input apparatus to a central processing unit (CPU) and the memory 102. The processor 106 runs various software and instructions in the memory 102 to perform various functions of the terminal 100 and perform data processing.

In some embodiments, the peripheral interface 108, the processor 106, and the memory controller 104 may be implemented in a single chip. In some other instances, they can be implemented by separate chips.

The radio frequency module 150 is configured to receive and transmit electromagnetic waves, realize mutual conversions of electromagnetic waves and electrical signals, and thus communicate with a communication network or other devices. The radio frequency module 150 may include various existing circuit elements configured to perform these functions, for example, an antenna, a radio frequency transceiver, a digital signal processor, an encryption/decryption chip, a subscriber identity module (SIM) card, a memory, and the like. The radio frequency module 150 can communicate with various networks, such as the Internet, the intranet, and a wireless network or communicate with other devices through the wireless network. The aforementioned wireless network may include a cellular telephone network, a wireless local area network, or a metropolitan area network. The aforementioned wireless network can use various communication standards, protocols and technologies, including but not limited to a Global System for Mobile Communication (GSM), an Enhanced Data GSM Environment (EDGE), a wideband code division multiple access (W-CDMA), a Code division multiple access (CDMA), a time division multiple access (TDMA), a Bluetooth, and a Wireless Fidelity (WiFi), such as IEEE 802.11a, IEEE 802.11b, IEEE802.11g and/or IEEE 802.11n, a Voice over Internet Protocol(VoIP), a Worldwide Interoperability for Microwave Access (Wi-Max), other protocols for emails, instant messaging and short messages, and any other suitable communication protocols, even those that have not yet been developed.

The positioning module 112 is configured to obtain a current position of the terminal 100. Instances of positioning module 112 include but are not limited to a global positioning system (GPS), a positioning technology based on the wireless local area network or the mobile communication network.

The camera module 114 is configured to take photos or videos. The captured photos or videos may be stored in the memory 102 and sent by the radio frequency module 150.

The audio module 116 provides an audio interface to the user, which may include one or more microphones, one or more speakers, and audio circuits. The audio circuit receives sound data from the peripheral interface 108, converts the sound data into electrical information, and transmits the electrical information to the loudspeaker. The loudspeaker converts the electrical information into sound waves that can be heard by human ears. The audio circuit also receives the electrical information from the microphone, converts the electrical signal into sound data, and transmits the sound data to the peripheral interface 108 for further processing. The audio data may be obtained from the memory 102 or through the radio frequency module 150. In addition, the audio data may also be stored in the memory 102 or sent by the radio frequency module 150. In some instances, the audio module 116 may also include a headset jack for providing an audio interface to an earphone or other devices.

The screen 118 provides an output interface between the terminal 100 and a user. Specifically, the screen 118 displays a video output to the user, which may include a text, graphics, a video, and any combination thereof. Some output results correspond to some user interface objects. It can be understood that the screen 118 may also include a touch screen. The touch screen provides an output and input interface between the terminal 100 and the user. In addition to displaying the video output to the user, the touch screen also receives user's inputs, such as the user's click, swipe and other gesture operations, so that the user interface objects can respond to the user's input. The technology for detecting user's inputs can be based on a resistance-type, a capacitance-type or any other possible touch detection technologies. Specific instances of touch screen display units include, but are not limited to, liquid crystal displays or luminescent polymer displays.

The key module 160 also provides an interface for the user to input to the terminal 100. The user can press different keys to make the terminal 100 to perform different functions.

The fill light apparatus of the present application includes a flashlight and a light-guide component, the light-guide component is located at a light-emitting edge of the flashlight, and can be controlled to change a shape and/or a light-transmitting area to change a light-emitting area and/or a light-emitting angle of the fill light apparatus. The controlling method of the fill light apparatus includes: obtaining a control parameter of the light-guide component, and changing a shape and/or a light-transmitting area of the light-guide component according to the control parameter to change a light-emitting area and/or a light-emitting angle of the fill light apparatus. In this way, the present application can control the light-emitting area and/or the light-emitting angle of the fill light apparatus to meet fill light requirements in different shooting scenarios.

## Claims

1. A controlling method of fill light apparatus, wherein the fill light apparatus comprises a flashlight and a light-guide component, the light-guide component is located at a light-emitting edge of the flashlight, and the controlling method comprises:
obtaining (310) a control parameter of the light-guide component; and
changing (320) a shape and/or a light-transmitting area of the light-guide component according to the control parameter to change a light-emitting area and/or a light-emitting angle of the fill light apparatus; wherein:
the obtaining (310) a control parameter of the light-guide component comprises:
obtaining a preview image of a camera module;
performing a recognition of a pupil in the preview image; and
if the recognition is successful, determining, according to a position of the pupil, a light-shielding area of the light-guide component to obtain the control parameter;
**characterized in that**
the fill light apparatus further comprises a diastimeter configured to detect a distance between a shooting target and the fill light apparatus, wherein the obtaining (310) a control parameter of the light-guide component further comprises:
obtaining the distance between the shooting target and the fill light apparatus;
when the distance is greater than or equal to a preset distance, obtaining a first preset light-emitting angle as a target light-emitting angle to obtain the control parameter, or obtaining a light-emitting angle corresponding to the distance as the target light-emitting angle to obtain the control parameter; and
when the distance is less than the preset distance, obtaining a second preset light-emitting angle as the target light-emitting angle to obtain the control parameter, wherein the second preset light-emitting angle is greater than the first preset light-emitting angle.

2. The controlling method of the fill light apparatus according to claim 1, wherein the method further comprises:
when obtaining the preview image, controlling the flashlight to pre-flash for a preset number of times at a preset power or illuminate continuously.

3. The controlling method of the fill light apparatus according to claim 1, wherein the light-guide component comprises a first polarizer, a liquid crystal layer and a second polarizer arranged in sequence, wherein the changing (320) a shape and/or a light-transmitting area of the light-guide component according to the control parameter comprises:
controlling an arrangement direction of liquid crystals in the liquid crystal layer according to the light-shielding area, so that the light-guide component is made non light-transmitting in the light-shielding area.

4. The controlling method of the fill light apparatus according to claim 1, wherein the light-guide component is connected with a deformation driving assembly, the deformation driving assembly is configured to drive the light-guide component to bend and deform, wherein the changing (320) a shape and/or a light-transmitting area of the light-guide component according to the control parameter comprises:
determining a driving stroke of the deformation driving assembly according to the target light-emitting angle; and
controlling, according to the driving stroke, the deformation driving assembly to drive the light-guide component to bend and deform to change the shape of the light-guide component.

5. The controlling method of the fill light apparatus according to claim 4, wherein the deformation driving assembly comprises a magnet, a coil and a driving ring, the driving ring surrounds the light-guide component by one turn, the coil is wound around the driving ring, and the magnet is located at opposite sides of the driving ring, wherein the controlling, according to the driving stroke, the deformation driving assembly to drive the light-guide component to bend and deform comprises:
obtaining an energizing current of the coil according to the driving stroke; and
energizing the coil according to the energizing current, so that the driving ring is driven to move to push up the light-guide component to bend and deform.

6. The controlling method of the fill light apparatus according to claim 1, wherein after the changing (320) a shape and/or a light-transmitting area of the light-guide component according to the control parameter to change a light-emitting area and/or a light-emitting angle of the fill light apparatus, the method further comprises:
controlling, according to a shooting operation or an illuminating operation, the flashlight to flash or continuously illuminate.

7. Fill light apparatus (10), comprising:
a flashlight (11); and
a light-guide component (12) located at a light-emitting edge of the flashlight (11), and controllable to change a shape and/or a light-transmitting area to change a light-emitting area and/or a light-emitting angle of the fill light apparatus (10); wherein:
the fill light apparatus (10) further comprises a recognizing module (18), configured to perform a recognition of a pupil in a preview image and determine a position of the pupil, so that the fill light apparatus (10) controls, according to the position of the pupil, to change the light-transmitting area of the light-guide component (12) to change the light-emitting area of the fill light apparatus (10);
**characterized in that**
the fill light apparatus (10) further comprises a diastimeter (14) configured to detect a distance between a shooting target and the fill light apparatus (10), so that the fill light apparatus (10) controls, according to the distance, to change a shape of the light-guide component (12) to change the light-emitting angle of the fill light apparatus (10), wherein a first preset light-emitting angle is obtained as a target light-emitting angle or a light-emitting angle corresponding to the distance is obtained as the target light-emitting angle when the distance is greater than or equal to a preset distance, and a second preset light-emitting angle is obtained as the target light-emitting angle when the distance is less than the preset distance, wherein the second preset light-emitting angle is greater than the first preset light-emitting angle.

8. The fill light apparatus (10) according to claim 7, wherein the light-guide component (12) comprises a first polarizer (121), a liquid crystal layer (122) and a second polarizer (123) arranged in sequence, the light-guide component (12) is connected with a liquid crystal driving module (17), and the liquid crystal driving module (17) is configured to control an arrangement direction of liquid crystals in the liquid crystal layer (122) to change the light-transmitting area of the light-guide component (12).

9. The fill light apparatus (10) according to claim 7, wherein the light-guide component (12) is connected with a deformation driving assembly, and the deformation driving assembly (13) is configured to drive the light-guide component (12) to bend and deform to change the shape of the light-guide component (12).

10. A computer storage medium, wherein the computer storage medium stores computer program instructions that, when executed by a processor of the fill light apparatus of any one of claims 7-9, implement the controlling method of fill light apparatus according to any one of claims 1-6,

## Patentansprüche

1. Steuerverfahren für eine Fülllichtvorrichtung, wobei die Fülllichtvorrichtung eine Stableuchte und eine Lichtleiterkomponente umfasst, die Lichtleiterkomponente an einer lichtemittierenden Kante der Stableuchte angeordnet ist und das Steuerverfahren Folgendes umfasst:
Erhalten (310) eines Steuerparameters der Lichtleiterkomponente; und
Ändern (320) einer Form und/oder einer lichtdurchlässigen Fläche der Lichtleiterkomponente gemäß dem Steuerparameter, um eine lichtemittierende Fläche und/oder einen lichtemittierenden Winkel der Fülllichtvorrichtung zu ändern; wobei:
das Erhalten (310) eines Steuerparameters der Lichtleiterkomponente Folgendes umfasst:
Erhalten eines Vorschaubilds eines Kameramoduls;
Durchführen einer Erkennung einer Blende in dem Vorschaubild; und
wenn die Erkennung erfolgreich ist, Bestimmen eines lichtabschirmenden Bereichs der Lichtleiterkomponente gemäß einer Position der Blende, um den Steuerparameter zu erhalten; **dadurch gekennzeichnet, dass**
die Fülllichtvorrichtung ferner ein Diastimeter umfasst, das dazu konfiguriert ist, einen Abstand zwischen einem Aufnahmeziel und der Fülllichtvorrichtung zu erfassen, wobei das Erhalten (310) eines Steuerparameters der Lichtleiterkomponente ferner Folgendes umfasst:
Erhalten der Entfernung zwischen dem Aufnahmeziel und der Fülllichtvorrichtung;
wenn die Entfernung größer oder gleich einer voreingestellten Entfernung ist, Erhalten eines ersten voreingestellten Lichtabstrahlwinkels als Ziel-Lichtabstrahlwinkel, um den Steuerparameter zu erhalten, oder Erhalten eines Lichtabstrahlwinkels, der der Entfernung des Ziel-Lichtabstrahlwinkels entspricht, um den Steuerparameter zu erhalten; und
wenn die Entfernung kleiner als die voreingestellte Entfernung ist, Erhalten eines zweiten voreingestellten Lichtemissionswinkels als den Ziel-Lichtemissionswinkel, um den Steuerparameter zu erhalten, wobei der zweite voreingestellte Lichtemissionswinkel größer als der erste voreingestellte Lichtemissionswinkel ist.

2. Steuerverfahren der Fülllichtvorrichtung nach Anspruch 1, wobei das Verfahren ferner Folgendes umfasst:
Beim Erhalten des Vorschaubilds, Steuern der Stableuchte, um für eine voreingestellte Anzahl von Malen bei einer voreingestellten Leistung vorzublinken oder kontinuierlich zu leuchten.

3. Steuerverfahren der Fülllichtvorrichtung nach Anspruch 1, wobei die Lichtleiterkomponente einen ersten Polarisator, eine Flüssigkristallschicht und einen zweiten Polarisator umfasst, die hintereinander angeordnet sind, wobei das Ändern (320) einer Form und/oder eines lichtdurchlässigen Bereichs der Lichtleiterkomponente gemäß dem Steuerparameter Folgendes umfasst:
Steuern einer Anordnungsrichtung von Flüssigkristallen in der Flüssigkristallschicht gemäß dem Lichtabschirmungsbereich, so dass die Lichtleiterkomponente in dem Lichtabschirmungsbereich nicht lichtdurchlässig gemacht wird.

4. Steuerverfahren der Fülllichtvorrichtung nach Anspruch 1, wobei die Lichtleiterkomponente mit einer Verformungsantriebsbaugruppe verbunden ist, die Verformungsantriebsbaugruppe dazu konfiguriert ist, die Lichtleiterkomponente zum Biegen und Verformen anzutreiben, wobei das Ändern (320) einer Form und/oder eines lichtdurchlässigen Bereichs der Lichtleiterkomponente gemäß dem Steuerparameter Folgendes umfasst:
Bestimmen eines Antriebshubs der Verformungsantriebsbaugruppe gemäß dem Ziel-Lichtemissionswinkel; und
Steuern, gemäß dem Antriebshub, der Verformungsantriebsbaugruppe, um die Lichtleiterkomponente anzutreiben, sich zu biegen und zu verformen, um die Form der Lichtleiterkomponente zu ändern.

5. Steuerverfahren der Fülllichtvorrichtung nach Anspruch 4, wobei die Verformungsantriebsbaugruppe einen Magneten, eine Spule und einen Antriebsring umfasst, der Antriebsring die Lichtleiterkomponente mit einer Umdrehung umgibt, die Spule um den Antriebsring gewickelt ist und der Magnet an gegenüberliegenden Seiten des Antriebsrings angeordnet ist, wobei das Steuern der Verformungsantriebsbaugruppe zum Antreiben der Lichtleiterkomponente zum Biegen und Verformen gemäß dem Antriebshub Folgendes umfasst:
Erhalten eines Erregungsstroms der Spule gemäß dem Antriebshub;
und Erregen der Spule entsprechend dem Erregerstrom, so dass der Antriebsring angetrieben wird, um sich zu bewegen und die Lichtleiterkomponente nach oben zu drücken, um sich zu biegen und zu verformen.

6. Steuerverfahren der Fülllichtvorrichtung nach Anspruch 1, wobei das Verfahren nach dem Ändern (320) einer Form und/oder einer lichtdurchlässigen Fläche der Lichtleiterkomponente gemäß dem Steuerparameter zum Ändern einer Licht emittierenden Fläche und/oder eines Licht emittierenden Winkels der Fülllichtvorrichtung ferner Folgendes umfasst:
Steuern, gemäß einem Aufnahmevorgang oder einem Beleuchtungsvorgang, der Stableuchte, um zu blinken oder kontinuierlich zu leuchten.

7. Fülllichtvorrichtung (10), umfassend:
Eine Stableuchte (11); und
eine Lichtleiterkomponente (12), die sich an einer Lichtaustrittskante der Stableuchte (11) befindet und gesteuert werden kann, um eine Form und/oder eine Lichtaustrittsfläche zu ändern, um eine Lichtaustrittsfläche und/oder einen Lichtaustrittswinkel der Fülllichtvorrichtung (10) zu ändern; wobei:
die Fülllichtvorrichtung (10) ferner ein Erkennungsmodul (18)umfasst, das konfiguriert ist, um eine Erkennung einer Blende in einem Vorschaubild durchzuführen und eine Position der Blende zu bestimmen, so dass die Fülllichtvorrichtung (10) gemäß der Position der Blende steuert, die lichtdurchlässige Fläche der Lichtleiterkomponente (12) zu ändern, um die lichtdurchlässige Fläche der Fülllichtvorrichtung (10) zu ändern;
**dadurch gekennzeichnet, dass**
die Fülllichtvorrichtung (10) ferner ein Diastimeter (14) umfasst, das konfiguriert ist, einen Abstand zwischen einem Aufnahmeziel und der Fülllichtvorrichtung (10) zu erfassen, so dass die Fülllichtvorrichtung (10) gemäß dem Abstand steuert, um eine Form der Lichtleiterkomponente (12) zu ändern, um den Lichtemissionswinkel der Fülllichtvorrichtung (10) zu ändern, wobei ein erster voreingestellter Lichtemissionswinkel als ein Lichtemissionswinkel des Ziels erhalten wird oder ein Lichtemissionswinkel, der dem Abstand des Lichtemissionswinkels des Ziels entspricht, erhalten wird, wenn der Abstand größer oder gleich einem voreingestellten Abstand ist, und ein zweiter voreingestellter Lichtemissionswinkel als der Lichtemissionswinkel des Ziels erhalten wird, wenn der Abstand kleiner als der voreingestellte Abstand ist, wobei der zweite voreingestellte Lichtemissionswinkel größer als der erste voreingestellte Lichtemissionswinkel ist.

8. Fülllichtvorrichtung (10) nach Anspruch 7, wobei die Lichtleiterkomponente (12) einen ersten Polarisator (121), eine Flüssigkristallschicht (122) und einen zweiten Polarisator (123) umfasst, die in Folge angeordnet sind, die Lichtleiterkomponente (12) mit einem Flüssigkristallansteuermodul (17) verbunden ist und das Flüssigkristallansteuermodul (17) konfiguriert ist, um eine Anordnungsrichtung von Flüssigkristallen in der Flüssigkristallschicht (122) zu steuern, um den lichtdurchlässigen Bereich der Lichtleiterkomponente (12) zu ändern.

9. Fülllichtvorrichtung (10) nach Anspruch 7, wobei die Lichtleiterkomponente (12) mit einer Verformungsantriebsbaugruppe verbunden ist und die Verformungsantriebsbaugruppe (13) so konfiguriert ist, dass sie die Lichtleiterkomponente (12) antreibt, sich zu biegen und zu verformen, um die Form der Lichtleiterkomponente (12) zu ändern.

10. Computerspeichermedium, wobei das Computerspeichermedium Computerprogrammanweisungen speichert, die, wenn sie von einem Prozessor der Fülllichtvorrichtung nach einem der Ansprüche 7-9 ausgeführt werden, die Steuerverfahren einer Fülllichtvorrichtung nach einem der Ansprüche 1-6 implementiert.

## Revendications

1. Procédé de commande d'un appareil de lumière de remplissage, dans lequel l'appareil de lumière de remplissage comprend une lampe de poche et un composant de guide de lumière, le composant de guide de lumière est situé au niveau d'un bord d'émission de lumière de la lampe de poche, et le procédé de commande comprend :
obtenir (310) un paramètre de commande du composant de guide de lumière ; et
changer (320) une forme et/ou une zone de transmission de lumière du composant de guide de lumière en fonction du paramètre de commande pour changer une zone d'émission de lumière et/ou un angle d'émission de lumière de l'appareil de lumière de remplissage ; dans lequel :
l'obtention (310) d'un paramètre de commande du composant de guide de lumière comprend :
obtenir une image de prévisualisation d'un module de caméra ;
effectuer une reconnaissance d'une pupille dans l'image de prévisualisation ; et
si la reconnaissance est réussie, déterminer, en fonction d'une position de la pupille, une zone de protection contre la lumière du composant de guide de lumière pour obtenir le paramètre de commande ; **caractérisé en ce que**
l'appareil de lumière de remplissage comprend en outre un diastimètre configuré pour détecter une distance entre une cible de tir et l'appareil de lumière de remplissage, dans lequel l'obtention (310) d'un paramètre de commande du composant de guide de lumière comprend en outre :
obtenir la distance entre la cible de tir et l'appareil de lumière de remplissage ;
lorsque la distance est supérieure ou égale à une distance prédéfinie, obtenir un premier angle d'émission de lumière prédéfini en tant qu'angle d'émission de lumière cible pour obtenir le paramètre de commande, ou obtenir un angle d'émission de lumière correspondant à la distance en tant qu'angle d'émission de lumière cible pour obtenir le paramètre de commande ; et
lorsque la distance est inférieure à la distance prédéfinie, obtenir un second angle d'émission de lumière prédéfini en tant qu'angle d'émission de lumière cible pour obtenir le paramètre de commande, dans lequel le second angle d'émission de lumière prédéfini est supérieur au premier angle d'émission de lumière prédéfini.

2. Procédé de commande de l'appareil de lumière de remplissage selon la revendication 1, dans lequel le procédé comprend en outre :
lors de l'obtention de l'image de prévisualisation, contrôlez la lampe de poche pour qu'elle clignote un nombre prédéfini de fois à une puissance prédéfinie ou qu'elle s'allume en continu.

3. Procédé de commande de l'appareil de lumière de remplissage selon la revendication 1, dans lequel le composant de guide de lumière comprend un premier polariseur, une couche de cristaux liquides et un second polariseur agencés en séquence, dans lequel le changement (320) d'une forme et/ou d'une zone de transmission de lumière du composant de guide de lumière selon le paramètre de commande comprend :
contrôler une direction d'agencement de cristaux liquides dans la couche de cristaux liquides en fonction de la zone de protection contre la lumière, de sorte que le composant de guide de lumière soit rendu non transmetteur de lumière dans la zone de protection contre la lumière.

4. Procédé de commande de l'appareil de lumière de remplissage selon la revendication 1, dans lequel le composant de guide de lumière est connecté à un ensemble d'entraînement de déformation, l'ensemble d'entraînement de déformation est configuré pour entraîner le composant de guide de lumière à se plier et à se déformer, dans lequel le changement (320) d'une forme et/ou d'une zone de transmission de lumière du composant de guide de lumière selon le paramètre de commande comprend :
déterminer une course d'entraînement de l'ensemble d'entraînement de déformation en fonction de l'angle d'émission de lumière cible ; et
commander, en fonction de la course de conduite, l'ensemble d'entraînement de déformation pour entraîner le composant de guide de lumière à se plier et à se déformer pour changer la forme du composant de guide de lumière.

5. Procédé de commande de l'appareil de lumière de remplissage selon la revendication 4, dans lequel l'ensemble d'entraînement de déformation comprend un aimant, une bobine et une bague d'entraînement, la bague d'entraînement entoure le composant de guide de lumière d'un tour, la bobine est enroulée autour de la bague d'entraînement et l'aimant est situé sur les côtés opposés de la bague d'entraînement, dans lequel la commande, selon la course d'entraînement, de l'ensemble d'entraînement de déformation pour entraîner le composant de guide de lumière à se plier et à se déformer comprend :
obtenir un courant d'alimentation de la bobine en fonction de la course d'entraînement ;
et à exciter la bobine en fonction du courant d'excitation, de sorte que la bague d'entraînement soit entraînée à se déplacer pour pousser vers le haut le composant de guide de lumière à se plier et à se déformer.

6. Procédé de commande de l'appareil de lumière de remplissage selon la revendication 1, dans lequel, après le changement (320) d'une forme et/ou d'une zone de transmission de lumière du composant de guide de lumière selon le paramètre de commande pour changer une zone d'émission de lumière et/ou un angle d'émission de lumière de l'appareil de lumière de remplissage, le procédé comprend en outre :
commander, en fonction d'une opération de prise de vue ou d'une opération d'éclairage, la lampe de poche pour qu'elle clignote ou s'allume en continu.

7. Appareil d'éclairage de remplissage (10), comprenant:
une lampe de poche (11) ; et
un composant de guide de lumière (12) situé au niveau d'un bord d'émission de lumière de la lampe de poche (11), et pouvant être commandé pour changer une forme et/ou une zone de transmission de lumière pour changer une zone d'émission de lumière et/ou un angle d'émission de lumière de l'appareil de lumière de remplissage (10) ; dans lequel :
l'appareil de lumière de remplissage (10) comprend en outre un module de reconnaissance (18), configuré pour effectuer une reconnaissance d'une pupille dans une image de prévisualisation et déterminer une position de la pupille, de sorte que l'appareil de lumière de remplissage (10) commande, selon la position de la pupille, de changer la zone de transmission de lumière du composant de guide de lumière (12) pour changer la zone d'émission de lumière de l'appareil de lumière de remplissage (10) ;
**caractérisé en ce que**
l'appareil de lumière de remplissage (10) comprend en outre un diastimètre (14) configuré pour détecter une distance entre une cible de tir et l'appareil de lumière de remplissage (10), de sorte que l'appareil de lumière de remplissage (10) commande, en fonction de la distance, de changer une forme du composant de guide de lumière (12) pour changer l'angle d'émission de lumière de l'appareil de lumière de remplissage (10), dans lequel un premier angle d'émission de lumière prédéfini est obtenu en tant qu'angle d'émission de lumière cible ou un angle d'émission de lumière correspondant à la distance est obtenu en tant qu'angle d'émission de lumière cible lorsque la distance est supérieure ou égale à une distance prédéfinie, et un second angle d'émission de lumière prédéfini est obtenu en tant qu'angle d'émission de lumière cible lorsque la distance est inférieure à la distance prédéfinie, dans lequel le second angle d'émission de lumière prédéfini est supérieur au premier angle d'émission de lumière prédéfini.

8. Appareil de lumière de remplissage (10) selon la revendication 7, dans lequel le composant de guide de lumière (12) comprend un premier polariseur (121), une couche de cristaux liquides (122) et un second polariseur (123) agencés en séquence, le composant de guide de lumière (12) est connecté à un module de commande de cristaux liquides (17), et le module de commande de cristaux liquides (17) est configuré pour commander une direction de disposition de cristaux liquides dans la couche de cristaux liquides (122) pour changer la zone de transmission de lumière du composant de guide de lumière (12).

9. Appareil de lumière de remplissage (10) selon la revendication 7, dans lequel le composant de guide de lumière (12) est connecté à un ensemble d'entraînement de déformation, et l'ensemble d'entraînement de déformation (13) est configuré pour entraîner le composant de guide de lumière (12) à se plier et à se déformer pour changer la forme du composant de guide de lumière (12).

10. Support de stockage informatique, dans lequel le support de stockage de composants stocke des instructions de programme informatique qui, lorsqu'elles sont exécutées par un processeur de l'appareil à lumière de remplissage de l'une quelconque des revendications 7 à 9, mettent en oeuvre le
procédé de commande d'un appareil à lumière de remplissage selon l'une quelconque des revendications 1 à 6.
